# EUROPEAN PATENT APPLICATION

(11) **EP 2 413 400 A2**
(43) Date of publication of application: **01.02.2012**
(21) Application number: 11175422.2
(22) Date of filing: 26.07.2011
(51) Int. Cl.: H01M 2/34, H01M 10/04

(54) **Secondary battery**

(30) Priority: 26.07.2010 US 367555 P
(71) Applicant: Samsung SDI Co., Ltd., Yongin-si, Gyeonggi-do (KR)
(72) Inventor: Jang, Youngcheol, Gyeonggi-do (KR)
(74) Representative: Mounteney, Simon James

(57) **Abstract**

A secondary battery comprising: a battery cell including an electrode assembly; a protection circuit module; a temperature sensitive device electrically connected between the battery cell and the PCM; and a lead plate; wherein the lead plate is electrically connected to the PCM and is physically connected to both the temperature sensitive device and an electrode of the battery cell.

## Description

The present invention relates to a secondary battery.

A secondary battery may be overcharged or overdischarged during its charging and discharging. Overcharging or overdischarging can cause gas or heat to be generated from decomposition of electrolyte within the battery and can therefore impede the performance of the battery or damage the battery. To overcome this, it is known to provide a protection circuit module in the battery The protection circuit module interrupts charging and discharging operations upon detection of overcharge or overdischarge of the secondary battery.

A temperature sensitive device, such as a positive temperature coefficient (PTC) device or a negative temperature coefficient device or a thermal fuse may also be provided to the secondary battery to prevent thermal damage to the secondary battery. The temperature sensitive device senses heat generated from the bare cell of the battery and interrupts the current if an overcurrent flows through the bare cell.

The present invention sets out to provide a secondary battery that is capable of efficiently transferring heat from its battery cell to its temperature sensitive device, so as to improve its responsiveness to abnormal conditions and hence its operating stability.

A secondary battery according to the present invention comprises secondary battery comprising: a battery cell including an electrode assembly;
a protection circuit module (PCM); a temperature sensitive device electrically connected between the battery cell and the PCM; and a lead plate; wherein the lead plate is electrically connected to the PCM and is physically connected to both the temperature sensitive device and an electrode of the battery cell.

Preferred features of the invention are set out in Claims 2 to 14.

According to a secondary battery of the present invention, since a lead plate connected to an electrode of the battery cell extends to the temperature sensitive device, heat from the battery cell is transferred to the temperature sensitive device without loss and the device can sensitively operate according to the temperature of the battery cell. Therefore, operational reliability and product stability are improved.

Embodiments of the invention will now be described by way of example and with reference to the accompanying drawings in which:
FIG. 1 is a perspective view of a secondary battery according to one embodiment of the present invention;

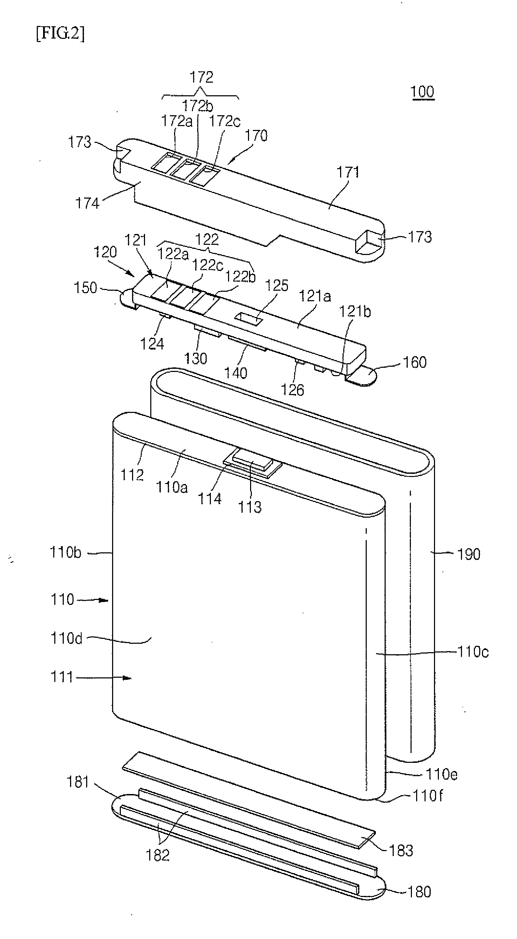

FIG. 2 is an exploded perspective view of the secondary battery of FIG. 1;

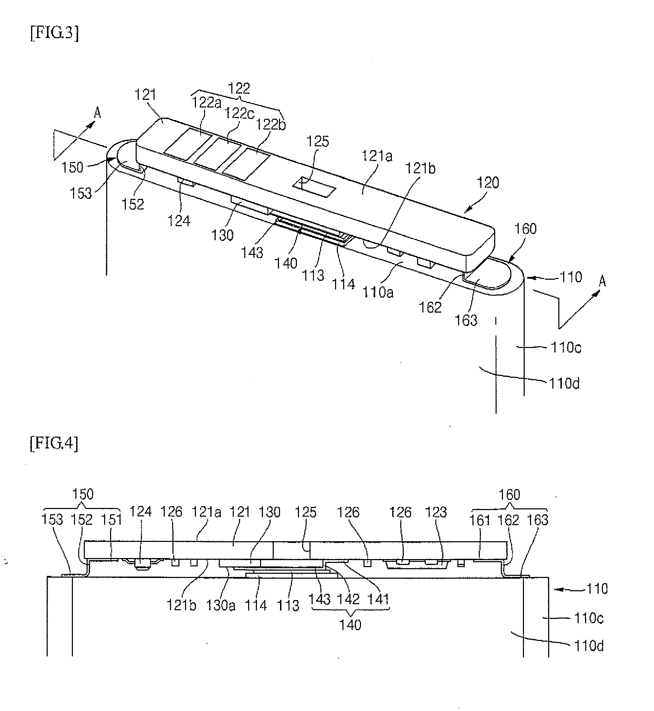

FIG. 3 is a perspective view showing a connected state of a battery cell and a protection circuit module of the secondary battery of FIGS. 1 and 2;
FIG. 4 is a sectional view cut along a line A-A' of FIG. 3; and

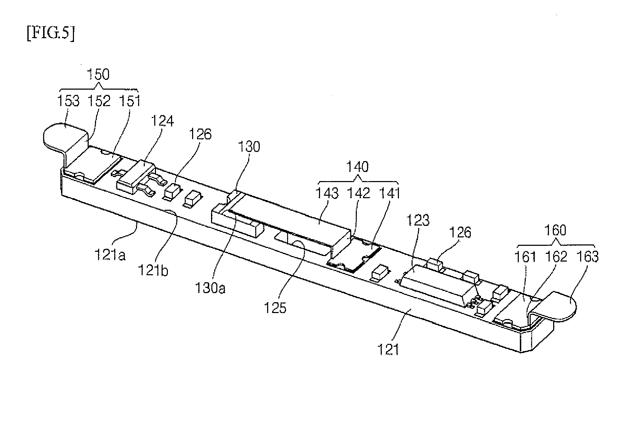

FIG. 5 is a bottom perspective view of the protection circuit module of the secondary battery of FIGS. 1 to 4.

Embodiments of the present invention will now be described in detail with reference to the accompanying drawings to fully explain the present invention in such a manner that it may easily be carried out by a person with ordinary skill in the art to which the present invention pertains.

Hereinafter, the structure of a secondary battery according to one embodiment of the present invention will be described.

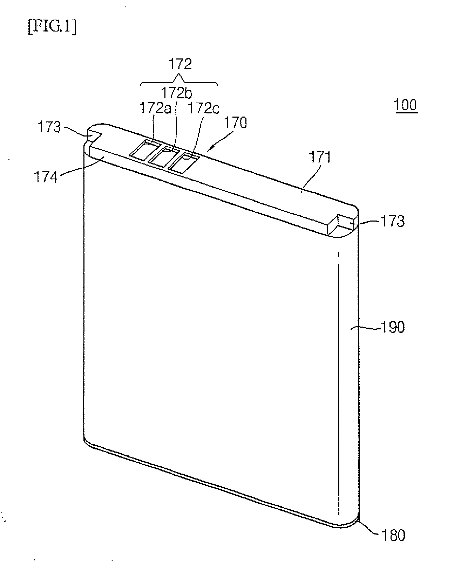

Referring to FIG. 1, a secondary battery 100 according to the invention includes a battery cell 110, a protection circuit module 120, a first lead plate 140, a second lead plate 150, and a third lead plate 160. Additionally, the secondary battery 100 further includes an upper cover 170, a lower cover 180, and a label 190.

The battery cell 110 is constituted by an electrode assembly (not shown) that is chargeable and dischargeable and includes a positive electrode, a negative electrode, and a separator disposed between the positive and the negative electrodes, a can 111 having a container shape to receive the electrode assembly and an electrolyte (not shown), and a cap plate 112 sealing the can 111. The cap plate 112 is made of metal. An electrode terminal 113 is connected substantially in the middle of the cap plate 112. Here, an insulating gasket 114 is interposed between the cap plate 112 and the electrode terminal 113 to insulate the electrode terminal 113 from the cap plate 112,

In this embodiment, the electrode terminal 113 may function as a negative electrode and the cap plate 112 as a positive electrode. However, polarities of the cap plate 112 and the electrode terminal 113 may be exchanged.

The battery cell 110 is constituted by an upper surface 110a from which-the electrode terminal 113 protrudes in a state of being insulated by the gasket 114, a pair of short side surfaces 110b and 110c and a pair of long side surfaces 110d and 110e which are continued to the upper surface 110a, and a lower surface 110f continued to the side surfaces 110b, 110c, 110d, and 110e and disposed to face the upper surface 110a. The pair of short side surfaces 110b and 110c refer to narrow side surfaces while the pair of long side surfaces 110d and 110e refer to wide side surfaces, out of the side surfaces 110b,110c,110d,and 110e.

The protection circuit module 120 is disposed at an upper part of the battery cell 110 and it is electrically connected with the battery cell 110. The protection circuit module 120 includes a circuit board 121, a terminal 122, a circuit device 123, a field effect transistor (FET) 124, a welding hole 125, and a passive device 126.

The circuit board 121 has a substantially planar shape and includes a protection circuit adapted to prevent overcharging and overdischarging of the bare cell 110. Here, it is noted that the circuit board 121 and the protection circuit module 120 share the same upper surface 121 a and the same lower surface 121 b.

The terminal 122 is formed on the upper surface 121 a of the circuit board 121 to electrically connect the circuit board 121 to an external electronic device. For example, the terminal 122 may include a pack negative terminal 122a, a pack positive terminal 122b, and a temperature and identification (ID) check terminal 122c.

The circuit device 123 is disposed on the lower surface 121 b of the circuit board 121. The circuit device 123 forms part of a charge and discharge circuit which performs charging and discharging with respect to the bare cell 110. In addition, the circuit device 123 includes a protection circuit which prevents the overcharging, overdischarging, and overcurrent as described above.

The FET 124 is disposed on the lower surface 121 b of the circuit board 121 and it is electrically connected with the circuit device 123 through the circuit board 121. The FET 124 forms part of the charge and discharge circuit with the circuit device 123. More specifically, the FET 124 is disposed on at least a part of a charging path or a discharging path of the battery cell 110 so as to control the charging and discharging operations. The FET 124 is separately formed outside the circuit device 123 since the FET 124 generates heat during the operation. However, the FET 124 may alternatively be disposed in the circuit device 123, depending on design of the circuit.

The welding hole 125 is disposed substantially in the middle of the circuit board 121 through the upper and the lower surfaces 121a and 121 b. The welding hole 125 is disposed on a region corresponding to the electrode terminal 113 of the battery cell 110, thereby supplying a welding space for welding of the first lead plate 140 to the electrode terminal 113 using resistance welding or laser welding. The first lead plate 140 will be described hereinafter.

The passive device 126 may constitute part of the charge and discharge circuit or the protection circuit of the circuit device 123. Although illustrated as a separate structure in the drawing, the passive device 126 may also be disposed in the circuit device 123.

The positive temperature coefficient device (PTC) 130 is disposed on the lower surface 121b of the circuit board 121 and it is electrically connected to the protection circuit module 120. The PTC 130 is a temperature sensitive device and it interrupts the current when the battery cell 110 reaches a predetermined reference temperature, thereby preventing an abnormal operation caused by heat generated from the battery cell 110. Here, the PTC 130 may be a chip PTC thermistor capable of being surface-mounted to the circuit board 121, but the invention is not limited thereto. For example, the PTC 130 may have a room temperature resistance of hundreds of ohms and an operation temperature of about 75 to 120°C.

In alternative embodiments, the PTC may be replaced by or supplemented by another temperature sensitive device such as a negative temperature coefficient device or a thermal device, for example.

A lower surface 130a facing the battery cell 110, out of surfaces of the PTC 130, is electrically connected to the first lead plate 140. That is, an end of the first lead plate 140 extends up to the lower surface 130a of the PTC 130. The PTC 130 may be connected to the first lead plate 140 by welding or by a heat conductive adhesive.

The first lead plate 140 is in direct physical contact with the electrode terminal 113 of the battery cell 110 and it is hence physically connected to an electrode of the battery cell. Since it is made of metal having high heat conductivity, the heat from the battery cell 110 may be transferred to the PTC 130 through the first lead plate 140 without loss. Therefore, the PTC 130 is capable of sensitively reacting to the temperature of the battery cell 110 and effectively interrupting the current flow when the battery cell temperature reaches or exceeds the reference temperature. As a consequence, stability of the secondary battery 100 according to the embodiment may be secured.

Although the first lead plate 140 is in direct physical contact with the electrode terminal 113, this is not essential. Some other thermally conductive element or layer could be interposed between the two. It is also possible for the first lead plate 140 to be physically connected with an electrode of the battery cell in some other way e.g. directly or via some other intermediate thermally conducting component.

The first lead plate 140 is disposed on the lower surface 121 b of the circuit board 121. The first lead plate 140 is connected to the pattern of the circuit board 121 and, by bending, further connected to the electrode terminal 113 of the battery cell 110. The end of the first lead plate 140 extends to be connected to the lower surface 130a of the PTC 130.

The first lead plate 140 includes a first connection portion 141 connected to the lower surface 121b of the circuit board 121, a riser portion 142 bending from the first connection portion 141, an intermediate portion 143 bending from the riser portion 142 to be connected with the electrode terminal 113 of the battery cell 110 and a second connection portion 143 connected to the PTC 130.

The first connection portion 141 is connected to the lower surface 121 b of the circuit board 121. Here, the first connection portion 141 is electrically connected with the circuit pattern formed at the lower surface 121b of the circuit board 121. The first connection portion 141 transmits to the circuit board 121 a signal applied from the electrode terminal 113 of the battery cell 110.

The riser portion 142 is bent from the first connection portion 141. Specifically, the riser portion 142 is bent by an angle of about 90° toward the cap plate 112 of the battery cell 110. Here, the riser portion 142 has a length corresponding to a thickness of the PTC 130, thereby maintaining a height from the first connection portion 141 to the intermediate portion 143 to correspond to the thickness of the PTC 130. Therefore, the intermediate portion 143 connected to the riser portion 142 is able to horizontally extend to the lower surface 130a of the PTC 130.

The intermediate portion 143 is bent from the riser portion 142. In addition, the intermediate portion 143 extends in the opposite direction to the first connection portion 141 with respect to the riser portion 142.

The intermediate portion 143 is in contact with the electrode terminal 113 of the battery cell 110. Also, the intermediate portion 143 extends into the second connection portion 143, which is electrically connected with the electrode terminal 113. The intermediate portion 143 may be welded to the electrode terminal 113 via the welding hole 125 of the protection circuit module 120. Since the intermediate portion 143 directly contacts the electrode terminal 113, heat from the battery cell 110 is efficiently transferred to the intermediate portion 143 through the electrode terminal 113.

The second connection portion 143 extends to the lower surface 330a of the PTC 130. The second connection portion 143 may be connected to the lower surface 130a by welding or by a heat conductive adhesive. The second connection portion 143 transfers the heat from the electrode terminal 113 of the battery cell 110 to the PTC 130 without significant loss. Accordingly, the PTC 130 is capable of accurately sensing the temperature of the battery cell 110 and sensitively performing interruption of the current when the battery cell 110 reaches or exceeds the reference temperature.

The second lead plate 150 is disposed at one lower side of the protection circuit module 120 and is electrically connected with a terminal pattern of the protection circuit module 120. The second lead plate 150 forms an electrical connection between the bare cell 110 and the protection circuit module 120. The second lead plate 150 may be made of metal such as nickel or a nickel alloy. Here, the second lead plate 150 may be connected with the upper surface 110a of the bare cell, that is, the cap plate 113 to function as a positive electrode. The second lead plate 150 includes a first region 151 disposed at a lower part of the protection circuit module 120, a second region 152 bending from the first region 151, and a third region 153 bending from the second region 152 to be connected with the cap plate 113 of the battery cell 110.

The third lead plate 160 is disposed at the other lower side of the protection circuit module 120, corresponding to the second lead plate 150. The third lead plate 160 is disposed symmetrically to the second lead plate 150 and is also electrically connected with the terminal pattern of the protection circuit module 120. The third lead plate 160 includes a first region 161, a second region 162, and a third region 163 respectively corresponding to the regions 151 to 153 of the second lead plate 150.

The upper cover 170 is connected to an upper part of the battery cell 110 and has an inner space to receive the protection circuit module 120. The upper cover 170 includes a cover plate 171, and sidewalls 173 and 174 extending from the cover plate 171 toward the protection circuit module 120.

The cover plate 171 has a substantially similar shape to the upper surface 110a of the battery cell 110. An inner surface of the cover plate 171 faces the upper surface 121 b of the circuit board 121. The cover plate 171 includes a through hole 172 on a region corresponding to the terminal 122. Since the terminal 122 is exposed to the outside through the through hole 172, the secondary battery 100 may be electrically connected with the external electronic appliance (not shown).

The sidewalls 173 and 174 are divided into end parts 173 disposed at both longitudinal ends of the upper cover 170 and linking parts 174 linking the end parts 173. The end parts 173 adjoin regions of the upper surface 110a of the battery cell 110 corresponding to the short side surfaces 110b and 110c, while supporting the cover plate 171. The linking parts 174 extend more than the end parts 173 down to the protection circuit module 120. Part of the linking parts 174 covering upper parts of the long side surfaces 110d and 110e of the battery cell 110 are enclosed by the label 190 that will be described hereinafter.

The lower cover 180 is connected to a lower part of the battery cell 110. The lower cover 180 may include a bottom plate 181, and extension parts 182 extending from the bottom plate 181 toward the battery cell 110.

The bottom plate 181 has substantially the same shape as the lower surface 110f of the battery cell 110 and may be attached to the lower surface 110f by an adhesive member 183.

In addition, the extension parts 182 cover lower parts of the long side surfaces 110d and 110e of the battery cell 110. The extension parts 182 are enclosed by the label 190.

The label 190 is attached to enclose the sidewalls 110b, 110c, 110d, and 110e of the battery cell 110. The label 190 partially covers the linking parts 174 of the upper cover 170 and the extension parts 182 of the lower cover 180.

According to the above, the first lead plate 140 disposed at the lower part of the protection circuit module 120 and connected with the electrode terminal 111 of the battery cell 110 is extended and connected to the lower surface of the PTC 130. Accordingly, heat from the battery cell 110 may be transferred to the PTC 130 without loss. Therefore, the PTC 130 is capable of sensitively reacting to the temperature of the battery cell 110 to secure operational reliability and product stability.

Although an embodiment of a secondary battery according to the present invention has been described herein, this is only by way of example. Therefore, the scope of the invention is not limited to the embodiment. It will be understood by those skilled in the art that various changes in form and details may be made without departing from the scope as defined by the appended claims.

## Claims

1. A secondary battery (100) comprising:
a battery cell (110) including an electrode assembly;
a protection circuit module (PCM) (120);
a temperature sensitive device (130) electrically connected between the battery cell (110) and the PCM (120); and
a lead plate (140);
wherein the lead plate (140) is electrically connected to the PCM and is physically connected to both the temperature sensitive device (130) and an electrode of the battery cell (110).

2. A secondary battery according to Claim 1, wherein the temperature sensitive device comprises a thermal fuse, a positive temperature coefficient device, or a negative temperature coefficient device.

3. A secondary battery according to Claim 1 or 2, wherein the PTC device (130) is located on a surface of the PCM (120) that faces the battery cell (110).

4. A secondary battery according to Claim 1, 2 or 3, wherein the lead plate (140) is connected to a surface of the PCM (120) that faces the battery cell (110).

5. A secondary battery according to any preceding claim, wherein a first connection portion (141) of the lead plate is connected to the PCM (120), a second connection portion (143) of the lead plate is connected to the PTC device (130) and an intermediate portion (143) of the lead plate that is located between the first and second connection portions (141, 143) is connected to the said electrode of the battery cell (110).

6. A secondary battery according to Claim 5, wherein a surface of the said intermediate portion (143) is in contact with a surface of an electrode terminal (113) electrically connected with the said electrode.

7. A secondary battery according to Claim 5 or 6, wherein the lead plate (140) comprises a riser portion (142) located between the first connection portion (141) and the intermediate portion (143), the said riser portion (142) extending in a first direction generally perpendicular to the said surface of the PCM (120) that faces the battery cell (110).

8. A secondary battery according to Claim 7, wherein the length of the riser portion (142) is at least as great as the amount that a portion of the PTC device (130) projects from the said surface of the PCM (120) that faces the battery cell (110).

9. A secondary battery according to Claim 7 or 8, wherein the first connection portion (141) extends in a second direction and the second connection portion (143) extends in a third direction, the said first and second directions being mutually opposite and generally perpendicular to the said first direction.

10. A secondary battery according to one of Claims 5 to 9, wherein the said lead plate (140) is formed by bending.

11. A secondary battery according to any preceding claim, wherein the lead plate (140) is connected to the PTC device (130) by welding or by a heat conductive adhesive member.

12. A secondary battery according to any preceding claim, comprising a welding hole (125) in the PCM (120) at a location corresponding to where the lead plate (140) is connected to the electrode of the battery cell (110).

13. A secondary battery according to any preceding claim, wherein the PCM (120) is disposed adjacent an upper surface of the battery cell (110).

14. A secondary battery according to any preceding claim, wherein the lead plate (140) is connected to an electrode terminal (113) of the battery cell (110).
